# EUROPEAN PATENT SPECIFICATION

(11) **EP 0 181 572 B1**
(45) Date of publication and mention of the grant of the patent: **15.09.1993**
(21) Application number: 85113844.6
(22) Date of filing: 31.10.1985
(51) Int. Cl.: G11B 27/10, G11B 27/13, G11B 27/32

(54) **Tape position display apparatus using counter roller pulses and CTL pulses**
Bandpositionsanzeigegerät, das Impulse von einem Roller und CTL-Pulse verwendet
Dispositif indicateur de déroulement de bande utilisant des impulsions d'un rouleau et des impulsions CTL

(30) Priority: 31.10.1984 JP 229713/84; 15.11.1984 JP 240973/84
(43) Date of publication of application: 21.05.1986
(73) Proprietor: SONY CORPORATION, Tokyo 141 (JP)
(72) Inventor: Abe, Fumiyoshi c/o Sony Corporation, Tokyo (JP)
(74) Representative: Schmidt-Evers, Jürgen, Dipl.-Ing.

(56) References cited:
- EP-A- 0 091 202
- EP-A- 0 100 167
- FR-A- 2 344 926

## Description

This invention generally relates to a tape position display apparatus and, more particularly, is directed to a tape position display apparatus for use with a VTR(video tape recorder), an audio tape recorder and the like.

In the prior art, there are known the following tape position display apparatus. One of the tape position display apparatus is such one in which there are provided with a roller rotating with the tape running while in contact with a magnetic tape, a rotation detector attached to the roller and a count display apparatus driven by a tape running amount detecting pulse derived from the rotation detector thereby to display a tape running amount. The other of the tape position display apparatus is such that a position signal(CTL signal) is recorded along the side edge of the magnetic tape in its longitudinal direction with an equal distance, while the magnetic tape is transported, the position signal is reproduced by a magnetic head from this magnetic tape and the count display is driven by a tape running amount detecting pulse derived from the magnetic head thereby to display the tape running amount.

While the former tape position display apparatus has an advantage that a tape running amount detecting pulse of high reliability can be produced continuously, it has a defect that if the magnetic tape and the roller are slipped with each other or the magnetic tape is slackened, the detecting accuracy of the tape running amount detecting pulse is lowered.

Although the latter apparatus has improved the defect of the former apparatus, if a dropout occurs in the playback of the position signal, the detecting accuracy of the tape running amount detecting pulse is lowered inevitably.

Another tape timer for tape recorder/reproducer has been disclosed in the EP-A-0091202. According to the disclosure a tape timer uses pulses generated by a control track previously recorded on magnetic tape to determine the magnitude of phase shift between said control track pulses and pulses generated by a mechanical tachometer in contact with the magnetic tape. The pulses generated by said mechanical tachometer are counted and said counting sequence used to generate a pulse to up-date a tape timer. In response to a detected phase shift, the count sequence is dynamically adjusted by an amount determined by the magnitude of the phase shift in such a manner as to reduce said phase shift.

Therefore, such a tape running amount detecting apparatus is proposed, which is formed of the combination of the above first two apparatus and which can therefore improve the accuracy of the tape running amount detecting pulse(see a published document of Japanese patent application examined NO. 9504/1983).

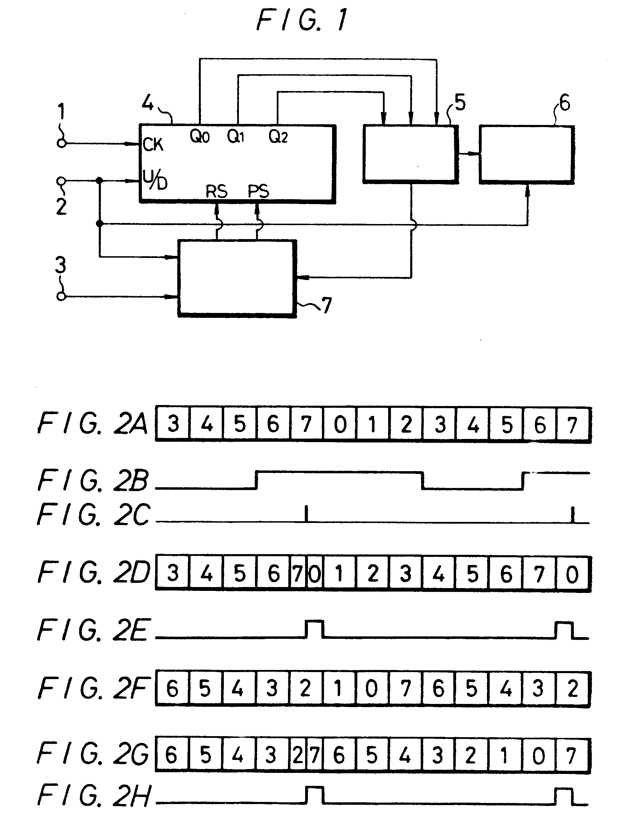

Such previously proposed tape running amount detecting apparatus will be described hereinbelow with reference to Fig. 1. While the embodiment of the above-described published document employs a quinary counter, this example shown in Fig. 1 employs an octonary counter for simplicity of explanation. In Fig. 1, reference numeral 4 designates an octonary up/down counter. A first pulse resulting from mechanically detecting the tape transport, which is applied to an input terminal 1, is applied to the clock input terminal of the counter 4, and a tape transport direction detecting signal resulting from mechanically detecting the tape transport is supplied to the up/down change over signal input terminal of the counter 4 through an input terminal 2.

The signals supplied to the input terminals 1 and 2 are produced as follows.

That is, a roller rotating with the tape running while in contact with the magnetic tape is attached with a rotation detector and rotation pulses having a phase difference of 90° are supplied to the rotation detecting circuit and then the rotation detecting circuit produces the above-mentioned signals.

Reference numeral 5 designates a logic circuit which receives outputs Q₂, Q₁ and Q₀ of 2², 2¹ and 2⁰ digits from the counter 4 to thereby produces a pulse at every one cycle of the counter 4 which pulse is supplied to a count display 6. Also this logic circuit 5 supplies to a reset/preset pulse generating circuit 7 a gating signal so as to remove a noise. In this case, the count display 6 also receives the tape transport direction detecting signal derived from the input terminal 2. This display 6 is arranged to display the tape transport amount in the form of hour, minute, second and frame(1/30 second).

The reset/preset pulse generating circuit 7 receives the tape transport direction detecting signal derived from the input terminal 2 and a second pulse(which is gated by the above-mentioned gating signal) which results from the tape transport, derived from the input terminal 3 and supplies the reset pulse and the preset pulse to the counter 4 on the basis of the above signals.

The second pulse applied to the input terminal 3 is the reproduced signal reproduced by the magnetic head from the position signal(CTL signal) recorded on the side edge of the magnetic tape in its longitudinal direction with an equal distance.

In this case, the second pulse is the pulse of 30Hz when the magnetic tape is transported at a normal tape speed. Then, the frequency of the first pulse is selected 240Hz (=30Hz x 8) upon the normal tape speed.

The operation of the prior art tape transport amount detecting apparatus shown in Fig. 1 will be described with reference to Figs. 2A to 2H hereinafter.

First, let it be assumed that the second pulse supplied to the input terminal 3 is neglected. Then, when the tape is transported in the positive direction and the counter 4 counts the first pulse in the positive direction, if the binary number is converted to the decimal number, the counted content of the counter 4 is changed in the sequential order of 0, 1, 2, 3, 4, 5, 6, 7, 0, 1, 2, 3, ... as shown in Fig. 2A. When on the other hand the tape is transported in the opposite direction and the counter 4 counts the first pulse in the reverse direction, if the binary number is converted to the decimal number, the counted content of the counter 4 is changed in the sequential order of 7, 6, 5, 4, 3, 2, 1, 0, 7, 6, ... as shown in Fig. 2F.

The pulse, which is supplied from the logic circuit 5 to the display 6, is generated when the counted content of the counter 4 is changed from the maximum value to the minimum value and vice versa, or the most significant bit output Q₂ of the counter 4 is changed in level from "1" to "0" or "0" to "1".

The gating signal supplied from the logic circuit 5 to the reset/preset pulse generating circuit 7(this gating signal is used to gate the second pulse) is the signal which becomes high level when the counted content of the counter 4 lies in a range from 6 to 2 or 2 to 6 and which becomes low level in other cases as shown in Fig. 2B.

The operation of the tape transport amount detecting apparatus will be further considered together with the second pulse to be supplied to the input terminal 3. In the case where the tape is transported in the positive direction and the counter 4 counts the first pulse in the positive direction as shown in Fig. 2D, when the counted content is 7, if the second pulse is produced, the reset pulse is supplied from the reset/preset pulse generating circuit 7 to the counter 4 so that as shown in Fig. 2D, the counted content is changed from 7 to 0 as shown in Fig. 2D. Thereafter, counted content is changed in the order of 1, 2, 3, .... When the counted content becomes 0, the second pulse is generated as shown in Fig. 2C but the counted content is not changed at all. When the counted content of the counter 4 is changed from 7 to 0 as shown in Fig. 2E, the pulse is generated from the logic circuit 5 and then fed to the count display 6, in which the displayed content is incremented by 1 each.

Further, in the case where the magnetic tape is transported in the opposite direction and the counter 4 counts the first pulse in the reverse direction as shown in Fig. 2G, when the counted content is 2, if the second pulse is generated as shown in Fig. 2C, the preset pulse is supplied from the circuit 7 to the counter 4 so that the counted content is changed to 7 as shown in Fig. 2G and is being changed in the order of 6, 5, 4,... thereafter. When the counted content becomes 7, the second pulse is generated as shown in Fig. 2C but the counted content of the counter 4 is not changed at all. When the counted content of the counter 4 is changed from 2 to 7 or 0 to 7 as shown in Fig. 2H, the pulse is derived from the logic circuit 5 and then fed to the count display 6 in which the displayed content is decremented by 1 each.

By the way, in the tape transport amount detecting apparatus shown in Fig. 1, since the counted content of the counter 4 which counts the first pulse is changed by the second pulse, it is possible to detect the tape transported amount with high accuracy. On the contrary, in the prior art apparatus, it is impossible to check whether the first pulse which results from mechanically detecting the tape transport is delayed from the second pulse which results from reproducing the position signal recorded on the tape or not and to see the difference amount terebetween. Further it is not possible to know much difference they have.

Furthermore, if the phase difference between the first and second pulses is large, there is a defect that the phase of the tape transported detecting pulse finally obtained is considerably changed by the second pulse thoroughly.

Accordingly, it is the object of this invention to provide a tape position display apparatus which can detect the tape running amount with high accuracy.

The object is solved by the features of claim 1. Further developments of the invention are given in claims 2-5.

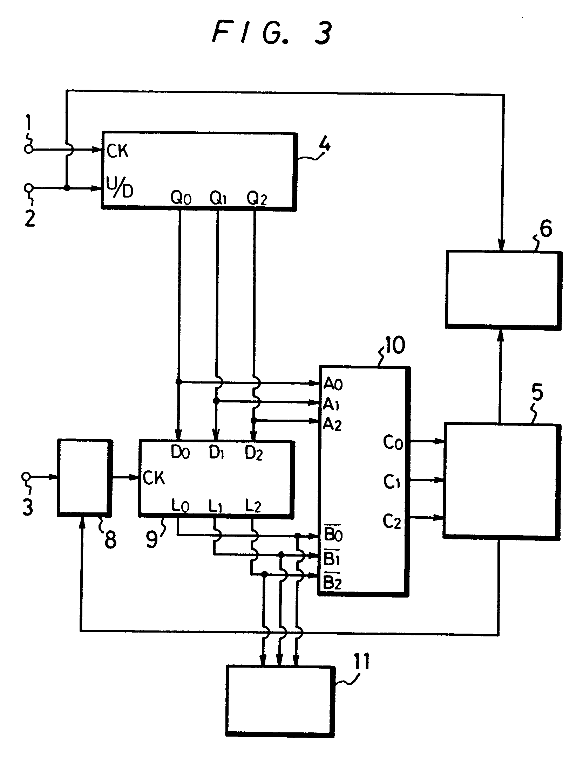

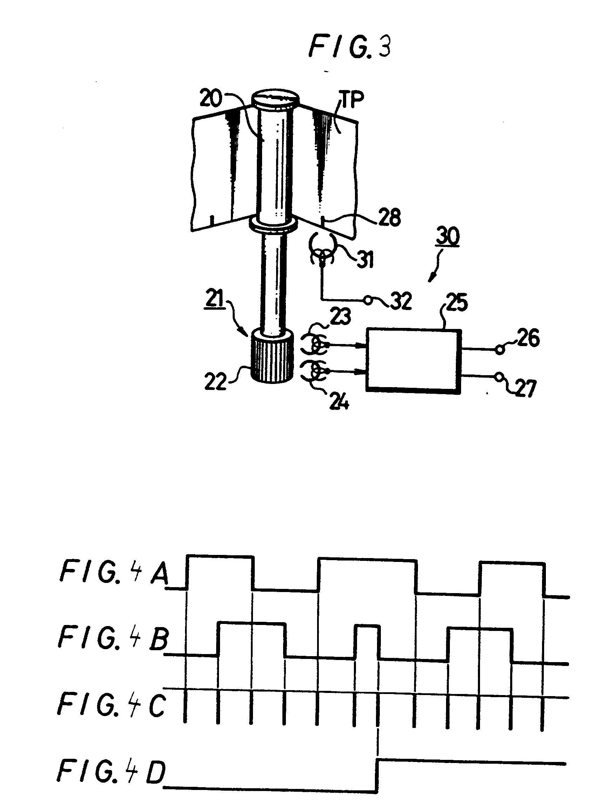

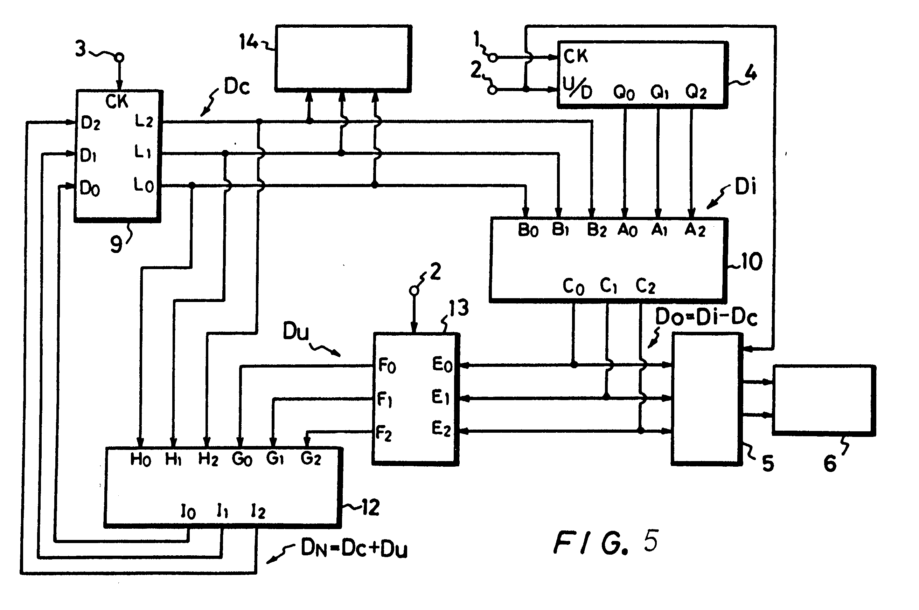

An embodiment of the invention will be described hereafter with reference to the drawings, in which
Fig. 1 is a circuit block diagram showing an example of a prior art tape position display apparatus;
Figs. 2A to 2H are respectively timing charts useful for explaining the operation of the prior art tape position display apparatus shown in Fig. 1;
Fig. 3 is a diagram showing the pulse generating means for the embodiment of this invention;
Figs. 4A to 4D are respectively timing charts useful for explaining the operation thereof;
Fig. 5 is a circuit block digram showing another embodiment of the tape position display apparatus according to this invention; and
Figs. 6A to 6N and Figs. 7A to 7N are respectively timing charts useful for explaining the operation of the tape position display apparatus of the invention shown in Fig. 5;
The signals supplied to the input terminals 1 and 2 in Fig. 5 are produced from a first pulse generating means 30 which is shown in Fig. 3. In Fig. 3, there is provided a roller 20 which is rotated in accordance with the tape running while in contact with a magnetic tape TP. This roller 20 is attached with a rotation detector 21(formed of a rotation magnet 22, which is attached through a shaft to the roller 20, and the magnetic beads 23 and 24). First and second rotation pulses(see Figs. 4A and 4B) having a phase difference of 90° therebetween are supplied to a rotation detecting circuit 25. Then, the rotation detecting circuit 25 produces a first pulse of 240Hz(Fig. 4C) corresponding to the leading and trailing edges of the rotation pulses(Figs. 4A and 4B) and a tape running direction detecting signal(Fig. 4D).

An embodiment of the tape positon display apparatus according to the present invention will hereinafter be described with reference to FIg. 5. In Fig. 5, reference numeral 4 designates an up/down counter of, for example, octonary type. The first pulse, which results from mechanically detecting the tape running, is supplied from an input terminal 1 the clock input terminal of the counter 4, while the tape running direction detecting signal, which results from mechanically detecting the tape running, is supplied from an input terminal 2, to an up/down switching signal input terminal thereof.

In this case, the latch circuit 9 receive outputs I₂, I₁, I₀ of digits 2², 2¹, 2⁰ from an adder 12 as inputs D₂, D₁, D₀ and latch the same by the second pulse applied to its clock input terminal from the input terminal 3.

The subtracter 10 is supplied with the output Di (Q₂, Q₁, Q₀) of digits 2², 2¹, 2⁰ from the counter 4 and the output D_{C} (L₂, L₁, L₀) of digits 2², 2¹, 2⁰ from the latch circuit 9, in which the latter is subtracted from the former.

Reference numeral 13 designates an identifying circuit which receives the outputs D₀(C₂, C₁, C₀) of the outputs 2², 2¹ and 2⁰ from the subtracter 10 and the tape running direction detecting signal from the input terminal 2. When the tape TP is transported in the positive direction, if the output D₀ of the subtracter 10 advances in phase to any one of 1, 2 and 3, +a= -1 is obtained as an output Du; if the output D₀ delays in phase to any one of 4, 5, 6 and 7, -a= -1 is obtained as the output Du; and if the output D₀ of the subtracter 10 is zero and has no advanced or delayed phase, 0 is obtained as the output Du. When on the other hand the tape TP is transported in the opposite direction, if the output D₀ of the subtracter 10 advances in phase to any one of 1, 2 and 3, +a=+1 is obtained as the output Du; if the output D₀ delays in phase to any one of 4, 5 and 6, -a=-1 is obtained as the output Du; and if the output D₀ is 0 or 7 and has no advanced and delayed phase, 0 is obtained as the output Du, wherein a may be selected to be more than 2 or may be changed in accordance with the value of the output D₀.

The adder 12 receives the output Dc of the latch circuit 9 and the output Du of the identifying circuit 13 and produces an added output D_{N}(I₂, I₁, I₀). This output D_{N} is supplied to the latch circuit 9 and then latched therein by the second pulse from the input terminal 3.

The overall of the subtracter 10, the identifying circuit 13 and the adder 12 can be formed of a ROM(read only memory).

As shown in Fig. 5, in this embodiment, the logic circuit 5 receives the output(C₂, C₁, C₀) of the digits 2², 2¹ and 2⁰ from the subtracter 10 and the tape running direction detecting signal from the input terminal 2 and produces square wave signals each having a phase difference of 90° at every cycle of the counter 4. The square wave signals are delivered from the logic circuit 5 to the count display 6. The count display 6 displays the tape running amount in the form of hour, minute, second and frame(1/30 seconds). Further, reference numeral 14 designates a corrected data display which receives the latch output (L₀, L₁, L₂) from the latch circuit 9 to thereby display the corrected data.

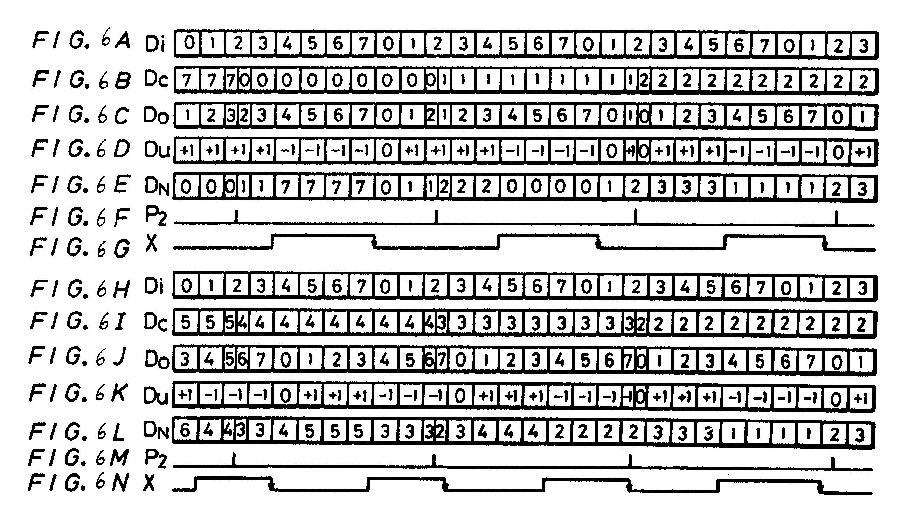

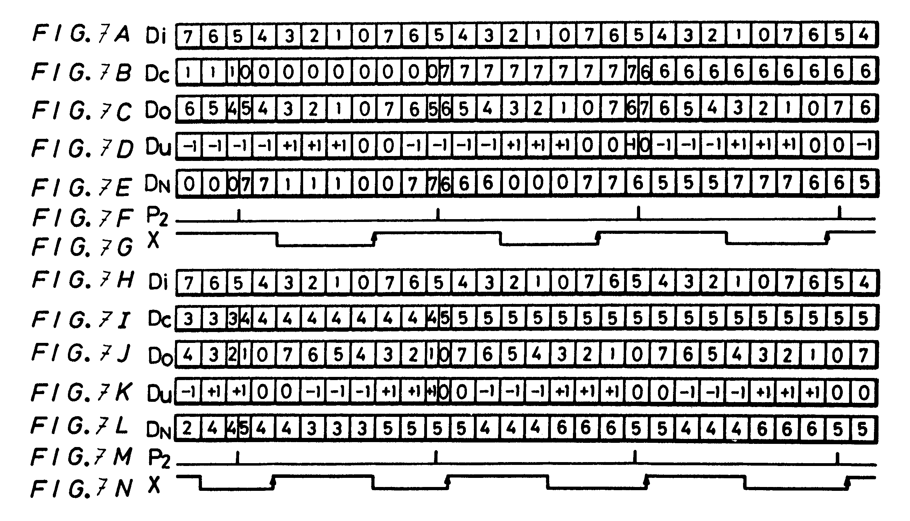

The operation of the tape position display apparatus shown in Fig. 5 will be described with reference to the timing charts of Figs. 6A to 6N and Figs. 7A to 7N.

Figs. 6A to 6N are respectively timing charts showing a case in which the tape TP is transported in the positive direction. In this case, Figs. 6A to 6G show a case in which the phase of the output D₀ of the subtracter 10 is advanced relative to the second pulse(this second pulse is represented as P₂), while Figs. 6H to 6N show a case in which it is delayed relative to the second pulse. In Figs. 6G and 6N, reference letter X designates a pair of tape running amount detecting signals which are supplied from the logic circuit 5 to the count display 6 and which are each a square wave signal having a duty ratio, 50% upon normal mode and which rises up when the signal D₀ is changed from 3 to 4 and falls down when the signal D₀ is changed from 7 to 0. Although the other tape running amount detecting signals are not shown, each of them becomes a signal which results from advancing the phase of the signal X by 90° when the tape TP is transported in the positive direction.

As shown in Figs. 6C and 6F, when D₀=3, if the second pulse P₂ is produced, the latch circuit 9 latches D_{N}=0 to thereby produce the output Dc=0. Then, since the Dc=0 is subtracted from Di=2 in the subtracter 10, the outpout D₀ is decreased by 1 from 3 to 2 immediately.

Further, as shown in Figs. 6C and 6F, when D₀=2, if the second pulse P₂ is produced, the latch circuit 9 latches D_{N}=1 to thereby produce the output Dc=1. Then, since Dc=1 is subtracted from Di=2 in the subtracter 10, the output D₀ is decreased by 1 from 2 to 1 immediately.

Further, as shown in Figs. 6C and 6F, when D₀ = 1, if the second pulse P₂ is generated, the latch circuit 9 latches D_{N} = 2 and hence D_{C} = 2 is obtained therefrom. Since in the subtracter 10 D_{C} = 2 is subtracted from Di = 2, the output D₀ is decreased from 1 to 0 by 1 and coincides in phase with the second pulse P₂. In this case, it is needless to say that even if thereafter the second pulse P₂ is produced when D₀=0, the output D₀=0 is not changed at all.

As shown in Figs. 6J and 6M, when D₀=5, if the second pulse P₂ is produced, the latch circuit 9 latches the D_{N}=4 to thereby produce the output Dc=4. Then, since Dc=4 is subtracted from Di=2 in the subtracter 10, the output D₀ is increased by 1 from 5 to 6 immediately.

As shown in Figs. 6J and 6M, when D₀=6, if the second pulse P₂ is produced, the latch circuit 9 latches D_{N}=3 to thereby produce the output Dc=3. Then, since Dc=3 is subtracted from Di=2 by the subtracter 10, the output D₀ is increased by 1 from 6 to 7 immediately.

As shown in Figs. 6J and 6M, when D₀=7, if the second pulse P₂ is produced, the latch circuit 9 latches D_{N}=2 to thereby produce the output Dc=2. Then, since Dc=2 is subtracted from Di=2 by the subtracter 10, thus the output D₀ is increased by 1 from 7 to 0 immediately and coincides in phase with the second pulse P₂.

Figs. 7A to 7N are respectively timing charts each useful for explaining a case in which the tape TP is transported in the opposite direction. In this case, Figs. 7A to 7G respectively show the case in which the output D₀ of the subtracter 10 is advanced in phase relative to the second pulse P₂, while Figs. 7H to 7N respectively show the case in which it is delayed in phase therefrom. In Figs. 7G and 7N, reference letters X respectively designate a pair of tape running amount detecting signals that are supplied from the logic circuit 5 to the count display 6. Each of the tape running amount detecting signals is the square wave signal having the duty ratio, 50% upon normal mode and which rises up when the output D₀ is changed from 0 to 7 and which falls down when the output D₀ is changed from 4 to 3. Although the other tape running amount detecting signals are not shown, when the tape TP is transported in the opposite direction, each of them becomes a signal which results from delaying the phase of the signal X by 90°.

As shown in Figs. 7C and 7F, when D₀=4, if the second pulse P₂ is produced, the latch circuit 9 latches D_{N}=0 to thereby produce the output Dc=0. Then, Dc=0 is subtracted from Di=5 in the subtracter 10, so that the output D₀ is increased by 1 from 4 to 5 immediately.

As shown in Figs. 7C and 7F, when D₀=5, if the second pulse P₂ is produced, the latch circuit 9 latches D_{N}=7 to thereby produce an output Dc=7. Then, the Dc=7 is subtracted from Di=5 in the subtracter 10 so that the output D₀ is increased by 1 from 5 to 6 immediately.

As shown in Figs. 7C and 7F, when D₀=6, if the second pulse P₂ is produced, the latch circuit 9 latches D_{N}=6 to thereby produce an output Dc=6. Then, Dc=6 is subtracted from Di=5 by the subtracter 10, thus the output D₀ is increased by 1 from 6 to 7 immediately and coincides in phase with the second pulse P₂.

As shown in Figs. 7J and 7M, when D₀=2, if the second pulse P₂ is produced, the latch circuit 9 latches D_{N}=4 to thereby produce an output Dc=4. Then, Dc=4 is subtracted from Di=5 by the subtracter 10, so that the output D₀ is decreased by 1 from 2 to 1 immediately.

As shown in Figs. 7J and 7M, when D₀=1, if the second pulse P₂ is produced, the latch circuit 9 latches D_{N}=5 to thereby produce an output Dc=5. Then, Dc=5 is subtracted from Di=5 by the subtracter 10, so that the output D₀ is decreased by 1 from 1 to 0 and coincides in phase with the second pulse P₂.

As mentioned above, even if the phase difference between the output D₀ from the subtracter 10 and the second pulse P₂ is large, such phase difference is gradually decreased each time when the second pulse P₂ arrives so that when the tape running direction detecting signals with the phase difference of 90°containing an information regarding the tape running direction are produced from the logic circuit 5 and then fed to the count display 6, there is no fear that the mis-operation will occur in the count display operation of the count display 6. In this connection, the count display 6 of this kind, which receives the two square wave signals having the phase difference of 90° therebetween and containing the tape running direction information and displays the count value, will be mis-operated if the phase of the tape running amount detecting signals is changed considerably.

Further, even if the noise is mixed into the second pulse P₂, the output from the subtracter 10 is not changed so much so that such tape position display apparatus will be affected a little by the mis-operation due to the noise.

A first explanation will be given on the operation of the tape position display apparatus in a case in which the tape TP is transported in the positive direction. As shown in Figs. 6C and 6F, when D₀=3, if the second pulse P₂ is produced, the counter 15 is set in the up-mode because K=7 so that the output Dc from the counter 15 is changed from 7 to 0. Thus Dc=0 is subtracted from Di=2 in the substracter 10 so that the output Dc is decreased by 1 from 3 to 2 immediately.

As shown in Figs. 6C and 6F, when D₀=2, if the second pulse P₂ is produced, the counter 15 is set in the up-mode because K=6 so that the output Dc from the counter 15 is changed from 0 to 1, whereby Dc=1 is subtracted from Di=2 in the subtracter 10 and thus the output D₀ is decreased by 1 from 2 to 1.

As shown in Figs. 6C and 6F, when D₀=1, if the second pulse P₂ is produced, the counter 15 is set in the up-mode since K=5 so that the output Dc from the counter 15 is changed from 1 to 2, whereby Dc=2 is subtracted from Di=2 in the substracter 10 and thus the output D₀ is decreased by 1 from 1 to 0 and coincides in phase with the second pulse P₂. Thereafter, even if the second pulse P₂ is produced when D₀=0, K=4 is established so that the output Dc from the counter 15 is not changed at all and thus D₀=0 is not changed, too.

While, as shown in Figs. 6J and 6M, when D₀=5, if the second pulse P₂ is produced, the counter 15 is set in the down-mode since K=1, so that the output Dc from the counter 15 is changed from 5 to 4, whereby Dc=4 is subtracted from Di=2 in the subtracter 10 and thus the output D₀ is immediately increased by 1 from 5 to 6.

As shown in Figs. 6J and 6M, when D₀=6, if the second pulse P₂ is produced, the counter 15 is set in the down-mode since K=2 so that the output Dc from the counter 15 is changed from 4 to 3, whereby Dc=3 is subtracted from Di=2 in the subtracter 10 and thus the output D₀ is immediately increased by 1 from 6 to 7.

As shown in Figs. 6J and 6M, when D₀=7, if the second pulse P₂ is produced, the counter 15 is set in the down-mode since K=3 so that the output Dc from the counter 15 is changed from 3 to 2, whereby Dc=2 is subtracted from Di=2 in the subtracter 10 and thus the output D₀ is immediately increased by 1 from 7 to 0 and coincides in phase with the second pulse P₂.

A next explanation will be given on the operation of the tape position display apparatus in a case in which the tape TP is transported in the opposite direction. As shown in Figs. 7C and 7F, when D₀=4, if the second pulse P₂ is produced, the counter 15 is set in the down-mode since K=0 so that the output Dc from the counter 15 is changed from 1 to 0, whereby Dc=0 is subtracted from Di=5 in the subtracter 10 and thus the output D₀ is immediately increased by 1 from 4 to 5.

As shown in Figs. 7C and 7F, when D₀=5, if the second pulse P₂ is produced, the counter 15 is set in the down-mode since K=1 so that the output Dc from the counter 15 is changed from 0 to 7, whereby Dc=7 is subtracted from Di=5 in the subtracter 10 and thus the output D₀ is immediately increased by 1 from 5 to 6.

As shown in Figs. 7C and 7F, when D₀=6, if the second pulse P₂ is produced, the counter 15 is set in the down-mode since K=2 so that the output Dc from the counter 15 is changed from 7 to 6, whereby Dc=6 is subtracted from Di=5 in the subtracter 10 and thus the output D₀ is immediately increased by 1 from 6 to 7 and coincides in phase with the second pulse P₂.

Further, as shown in Figs. 7J and 7M. When D₀=2, if the second pulse P₂ is produced, the counter 15 is set in the up-mode since K=6 so that the output Dc from the counter 15 is changed from 3 to 4, whereby Dc=4 is subtracted from Di=5 in the subtracter 10 and thus the output D₀ is immediately decreased by 1 from 2 to 1.

Furthermore, as shown in Figs. 7J and 7M, when D₀=1, if the second pulse P₂ is produced, the counter 15 is set in the up-mode since K=5 so that the output Dc from the counter 15 is changed from 4 to 5, whereby Dc=6 is subtracted from Di=5 in the subtracter 10 and thus the output D₀ is immediately decreased by 1 from 1 to 0 and coincides in phase with the second pulse P₂.

## Claims

1. A tape position display apparatus comprising
a) first generating means (30) for generating first electrical pulses resulting from mechanically detecting a tape transport;
b) counter means (4) for making a count of said first electrical pulses;
c) second generating means (31, 32) for generating, in response to said tape transport, second electrical pulses from a control track signal (28) recorded on said tape (TP) with a regular interval;
**characterized by**
d) subtracting means (10) supplied at its one input terminal with an output signal from said counter means (4);
e) identifying circuit means (13) for generating a correction value signal having a value and a polarity determined by the momentary of an output signal from said subtracting means for quantizing the amount of change of the output value of the substracting means with respect to a reference value;
f) adding means (12) suppplied at its one input terminal with the correction value signal from said identifying circuit means; and
g) latch circuit means (9) supplied with an output signal from said adding means (12) and for latching the same by said second electrical pulses from said second generating means (31, 32), wherein
an output value of said subtracting means (10) is shifted in response to the generation of said second electrical pulses and a tape position display (6) is driven in response to the output value from said subtracting means (10) by supplying a latch output signal of said latch circuit means (9) to said subtracting means (10) and adding means (12) at another input terminal thereof, thereby relating the change amount and direction of the content of the latch means upon occurrence of a second pulse to the number of first pulses counted by the counting means between that occurrence and the foregoing occurrence of the second pulse so as to compensate the output value of the counting means for a phase shift between the first and second pulses.

2. Apparatus according to claim 1, wherein said first electrical pulses occur at a frequency which is an integral multiple of the frequency of said second electrical pulses.

3. Apparatus according to claim 1, wherein said first electrical pulses occur at a frequency which is more than three times the frequency of said second electrical pulses.

4. Apparatus according to claim 1, wherein said first electrical pulses occur at a frequency which is more than 2ⁿ times the frequency of said second electrical pulses, n being an integer greater than 1.

5. Apparatus according to claim 1, further comprising a corrected data display (14) connected to an output of said latch circuit means.

## Patentansprüche

1. Bandpositionsanzeigevorrichtung mit
a) ersten Erzeugungsmitteln (30) zum Erzeugen erster sich aus dem mechanischen Erfassen eines Bandtransports ergebenden elektrischen Impulsen;
b) einem Zähler (4) zum Erzeugen eines Zählerstandes der genannten ersten elektrischen Impulse;
c) zweiten Erzeugungsmittel (31, 32) zum Erzeugen zweiter elektrischer Impulse als Reaktion auf den genannten Bandtransport aus einem Kontrollspursignal (28), das auf dem genannten Band (TP) mit einem regelmäßigen Abstand aufgezeichnet ist; gekennzeichnet durch
d) Subtraktionsmittel (10), welche an ihrem einen Eingangsanschluß mit einem Ausgangssignal von dem genannten Zähler (4) gespeist werden;
e) Identifizierungsschaltmittel (13) zum Erzeugen eines Korrekturwertsignals mit einem Betrag und einer Polarität, welche durch den Augenblickswert eines Ausgangssignals von den genannten Subtraktionsmitteln zum Quantisieren des Betrags der Änderung des Ausgangswertes der Subtraktionsmittel bezüglich eines Referenzwertes bestimmt werden;
f) Additionsmittel (12), welche an ihrem einen Eingangsanschluß mit dem Korrekturwertsignal von den genannten Identifizierungsschaltmittel gespeist werden;
g) Zwischenspeicherschaltmittel (9), welche mit einem Ausgangssignal von den genannten Additionsmitteln (12) gespeist werden, und zum Zwischenspeichern desselben durch die genannten zweiten elektrischen Impulse von den genannten zweiten Erzeugungsmitteln (31, 32), in welchen
ein Ausgangswert der genannten Subtraktionsmittel (10) als Reaktion auf die Erzeugung der genannten zweiten elektrischen Impulse verschoben wird, und eine Bandpositionsanzeige (6) als Reaktion auf den Ausgangswert von den genannten Subtraktionsmitteln (10) durch Bereitstellen eines Latchausgangssignals der genannten Zwischenspeicherschaltmittel (9) für die genannten Subtraktionsmittel (10) und Additionsmittel (12) an einem anderen Eingangsanschluß davon gesteuert wird, wobei auf diese Weise der Änderungsbetrag und die Richtung des Inhalts der Zwischenspeichermittel aufgrund des Auftretens eines zweiten Impulses zu der Anzahl der vom Zähler gezählten ersten Impulse zwischen diesem Auftreten und dem vorhergehenden Auftreten eines zweiten Impulses in Beziehung gebracht werden, um den Ausgangswert des Zählers für eine Phasenverschiebung zwischen den ersten und zweiten Impulsen zu kompensieren.

2. Vorrichtung nach Anspruch 1, bei der die genannten ersten elektrischen Impulse mit einer Frequenz auftreten, welche ein ganzzahliges Vielfaches der Frequenz der genannten zweiten elektrischen Impulse ist.

3. Vorrichtung nach Anspruch 1, bei der die genannten ersten elektrischen Impulse mit einer Frequenz auftreten, welche dreimal so groß wie die Frequenz der genannten zweiten elektrischen Impulse ist.

4. Vorrichtung nach Anspruch 1, bei der die genannten ersten elektrischen Impulse mit einer Frequenz auftreten, welche 2ⁿ-mal so groß wie die Frequenz der genannten zweiten elektrischen Impulse ist, wobei n eine ganze Zahl größer als 1 ist.

5. Vorrichtung nach Anspruch 1, welche weiterhin eine korrigierte Datenanzeige (14) aufweist, die mit einem Ausgang der genannten Zwischenspeicherschaltmittel verbunden ist.

## Revendications

1. Appareil d'affichage de position de bande comprenant :
a) un premier moyen de génération (30) pour générer des premières impulsions électriques résultant d'une détection mécanique d'un défilement de bande ;
b) un moyen de compteur (4) pour réaliser un comptage desdites premières impulsions électriques ;
c) un second moyen de génération (31, 32) pour générer, en réponse audit défilement de bande, des secondes impulsions électriques à partir d'un signal de piste de commande (28) enregistré sur ladite bande (TP) moyennant un intervalle régulier,
caractérisé par :
d) un moyen de soustraction (10) qui se voit appliquer au niveau de l'une de ses bornes d'entrée un signal de sortie en provenance dudit moyen de compteur (4) ;
e) un moyen de circuit d'identification (13) pour générer un signal de valeur de correction présentant une valeur et une polarité déterminées par l'état transitoire d'un signal de sortie en provenance dudit moyen de soustraction pour quantifier la valeur de variation de la valeur de sortie du moyen de soustraction par rapport à une valeur de référence ;
f) un moyen d'addition (12) qui se voit appliquer au niveau de l'une de ses bornes d'entrée le signal de valeur de correction en provenance dudit moyen de circuit d'identification ; et
g) un moyen de circuit de verrouillage (9) qui se voit appliquer un signal de sortie en provenance dudit moyen d'addition (12) et qui est prévu pour verrouiller ce même signal au moyen desdites secondes impulsions électriques en provenance dudit second moyen de génération (31, 32),
dans lequel une valeur de sortie dudit moyen de soustraction (10) est décalée en réponse à la génération desdites secondes impulsions électriques et un affichage de position de bande (6) est commandé en réponse à la valeur de sortie en provenance dudit moyen de soustraction (10) au moyen de l'application d'un signal de sortie de verrouillage dudit moyen de circuit de verrouillage (9) audit moyen de soustraction (10) et audit moyen d'addition (12) au niveau d'une autre de ses bornes d'entrée, ce qui rapporte la valeur de variation et le sens du contenu du moyen de verrouillage suite à la survenue d'une seconde impulsion au nombre des premières impulsions comptées par le moyen de comptage entre cette survenue et la survenue précédente de la seconde impulsion de manière à compenser la valeur de sortie du moyen de comptage quant à un déphasage entre les première et seconde impulsions.

2. Appareil selon la revendication 1, dans lequel lesdites premières impulsions électriques se produisent à une fréquence qui est un multiple entier de la fréquence desdites secondes impulsions électriques.

3. Appareil selon la revendication 1, dans lequel lesdites premières impulsions électriques se produisent à une fréquence qui vaut plus de trois fois la fréquence desdites secondes impulsions électriques.

4. Appareil selon la revendication 1, dans lequel lesdites premières impulsions électriques se produisent à une fréquence qui vaut plus de 2ⁿ fois la fréquence desdites secondes impulsions électriques, n étant un entier supérieur à 1.

5. Appareil selon la revendication 1, comprenant en outre un affichage de données corrigées (14) connecté à une sortie dudit moyen de circuit de verrouillage.
